Europäisches Patentamt

European Patent Office

Office européen des brevets

(11) Numéro de publication : **0 367 817 B1**

## (12) FASCICULE DE BREVET EUROPEEN

(45) Date de publication du fascicule du brevet :
16.12.92 Bulletin 92/51

(51) Int. Cl.⁵ : **F28F 25/08,** B01D 53/18, B23D 23/00

(21) Numéro de dépôt : **89905413.4**

(22) Date de dépôt : **26.04.89**

(86) Numéro de dépôt international :
**PCT/FR89/00197**

(87) Numéro de publication internationale :
**WO 89/10527 02.11.89 Gazette 89/26**

(54) **DISPOSITIF D'ECHANGE DE CHALEUR ET DE MATIERE.**

(30) Priorité : **28.04.88 FR 8805685**

(43) Date de publication de la demande :
**16.05.90 Bulletin 90/20**

(45) Mention de la délivrance du brevet :
**16.12.92 Bulletin 92/51**

(84) Etats contractants désignés :
**CH DE FR GB IT LI**

(56) Documents cités :
**EP-A- 0 190 435
EP-A- 0 215 413
CH-A- 438 217
DE-C- 2 942 843
FR-A- 1 489 126
FR-A- 2 183 704
FR-A- 2 329 371
GB-A- 966 747
GB-A- 1 408 774
US-A- 1 462 475**

(73) Titulaire : **L'AIR LIQUIDE, SOCIETE ANONYME POUR L'ETUDE ET L'EXPLOITATION DES PROCEDES GEORGES CLAUDE
75, Quai d'Orsay
F-75321 Paris Cédex 07 (FR)**

(72) Inventeur : **BOSQUAIN, Maurice
6, rue Foucault
F-75016 Paris (FR)**
Inventeur : **DARCHIS, François
5, rue Mathilda-Gray
F-78530 Buc (FR)**
Inventeur : **LEHMAN, Jean-Yves
27, domaine Château-Gaillard
F-94700 Maison-Alfort (FR)**

(74) Mandataire : **Vesin, Jacques et al
L'AIR LIQUIDE 75 Quai d'Orsay
F-75321 Paris Cédex 07 (FR)**

**Description**

La présente invention est relative aux dispositifs d'échange de chaleur et de matière à contre-courant entre un liquide descendant et un gaz montant, en particulier pour colonnes de distillation d'air, du type comprenant un paquet de lamelles ondulées comprenant des ondulations alternées parallèles, disposées chacune dans un plan général vertical et les unes contre les autres, les ondulations étant obliques et descendant dans des sens opposés d'une lamelle à la suivante, les ondulations de chaque lamelle définissant des premiers et des seconds canaux inclinés qui débouchent respectivement vers le bas et vers le haut sur un bord latéral de la lamelle.

Un dispositif de ce type est décrit dans le document EP-A-0.190.435.

Ces dispositifs, souvent appelés "garnissages ondulés-croisés", posent dans leur application à la distillation un problème difficile de conservation d'une bonne distribution du liquide descendant, le long des canaux inclinés, sur toute la hauteur des tronçons de la colonne de distillation équipés de tels garnissages. En effet, le liquide a tendance à migrer vers la paroi qui entoure le garnissage et à s'y accumuler en raison d'un ruissellement sur cette paroi et/ou le long du bord latéral des lamelles, ce qui dégrade les performances de la colonne de distillation.

L'invention a pour but de fournir un dispositif qui évite de façon particulièrement économique cet "effet de paroi".

A cet effet, selon l'invention, le dispositif comporte, le long du bord latéral des lamelles, des moyens formant obstacle à l'écoulement du liquide à l'extrémité inférieure des premiers canaux et assurant un renvoi du liquide vers l'intérieur du paquet de lamelles.

Le document FR-A-2.183.704 décrit un dispositif d'échange thermique ou de dépoussiérage comprenant des feuilles ondulées à ondulations verticales, soudées à des feuilles planes intercalaires, les feuilles ondulées comportant des déformations le long de leurs arêtes et sur leurs bords supérieurs pour élargir les filets liquides s'écoulant verticalement sur les feuilles.

L'invention concerne également l'utilisation d'un tel dispositif dans une colonne de distillation, notamment d'air.

Selon un aspect de l'invention, pour des colonnes de distillation de diamètre relativement petit, notamment jusqu'à un diamètre de l'ordre de 1 à 2 m, le dispositif est disposé dans la virole de la colonne, avec interposition, entre la virole et le paquet de lamelles, d'éléments de montage circulaires.

Pour les colonnes de plus grand diamètre, le paquet de lamelles est avantageusement maintenu dans une ceinture périphérique comportant des éléments de montage circulaires, coopérant avec la périphérie du paquet et pénétrant éventuellement dans le paquet.

Quelques exemples de réalisation de l'invention vont maintenant être décrits en regard des dessins annexés sur lesquels :

- la figure 1 représente schématiquement en perspective l'agencement général d'une colonne de distillation équipée d'un garnissage ondulé-croisé ;

- la figure 2 représente en perspective éclatée la constitution d'un élément du garnissage de la figure 1, avec des lamelles de structures connues ;

- la figure 3 est une vue schématique en bout d'une lamelle d'un garnissage conforme à l'invention ;

- la figure 4 est une vue prise en coupe suivant la ligne IV-IV de la figure 3 ;

- la figure 5 est une vue en plan de la lamelle de la figure 3 ;

- la figure 6 représente en perspective la même lamelle ;

- les figures 7 et 8 représentent en perspective deux autres modes de réalisation de l'invention ;

- les figures 9 à 11 représentent schématiquement la manière dont un garnissage suivant l'invention pourvus d'encoches périphériques ;

- la figure 12 illustre schématiquement la manière dont un garnissage suivant l'invention peut être monté dans la virole d'une colonne de distillation ;

- la figure 13 est une vue partielle prise en coupe suivant la ligne XIII-XIII de la figure 12 ;

- la figure 14 représente un organe faisant partie d'une variante du montage de la figure 12 ;

- la figure 15 illustre schématiquement une autre variante du montage de la figure 12 ;

- la figure 16 illustre schématiquement une autre manière dont un garnissage suivant l'invention peut être monté dans la virole d'une colonne de distillation ;

- la figure 17 illustre schématiquement une variante du montage de la figure 16 ;

- les figures 18 et 19 représentent schématiquement, en coupe longitudinale, une cisaille destinée à la réalisation des lamelles suivant l'invention ; et

- la figure 20 est une vue suivant la ligne XX-XX de la figure 18.

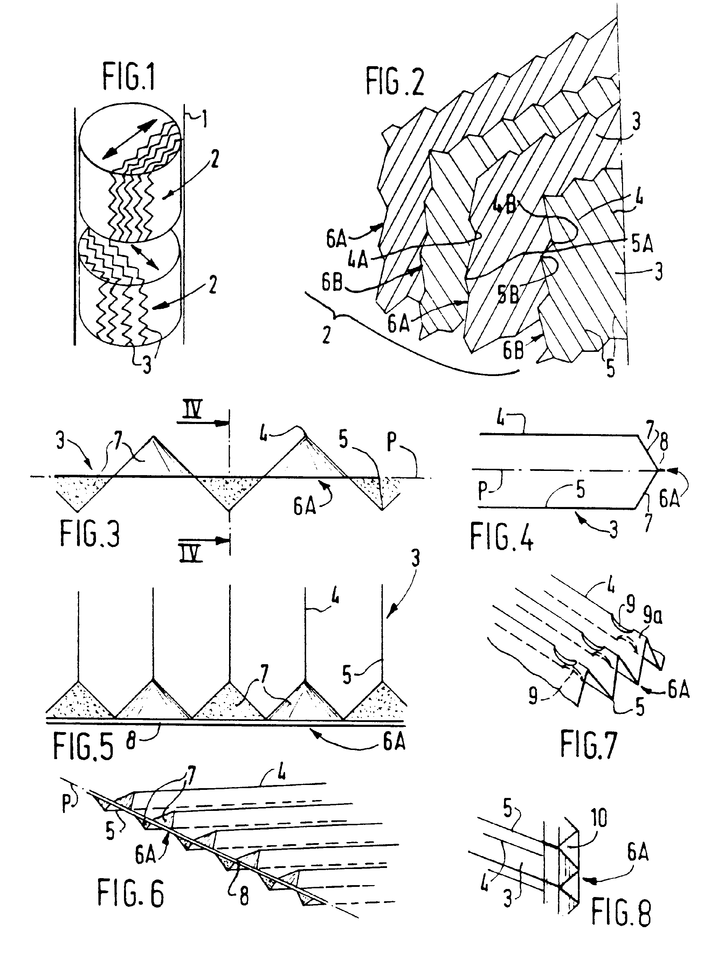

La figure 1 illustre l'agencement général de la partie courante d'une colonne de distillation, par exemple de distillation d'air. Cette partie courante comprend essentiellement une virole cylindrique 1 dans laquelle sont empilés des éléments de garnissage 2 de forme générale cylindrique.

Chaque élément 2, du type dit "ondulé-croisé", comprend un paquet de lamelles 3 ayant une forme générale rectangulaire et ondulées en oblique, les ondes ayant de préférence un profil triangulaire, le sens d'inclinaison des ondes est inversé d'une lamelle à la suivante, comme on le voit bien à la figure 2.

Toutes les lamelles d'un même élément sont disposées dans des plans verticaux parallèles et ont la même hauteur. Par contre, leur longueur, ou dimension horizontale, croît d'une valeur minimale, pour une lamelle extrême, à une valeur maximale pour la lamelle médiane, puis décroît de nouveau jusqu'à la même valeur minimale, pour l'autre lamelle extrême. Ainsi, lorsque toutes les lamelles sont pressées les unes contre les autres, on obtient un élément 2 de forme générale cylindrique dont le contour a été indiqué sur la figure 1.

Sur chaque face, chaque lamelle comporte des sommets d'ondes 4 et des creux d'ondes 5 définissant une multitude de canaux inclinés. Les sommets 4 ont chacun une extrémité inférieure 4A et une extrémité supérieure 4B, et les creux 5 ont chacun une extrémité inférieure 5A et une extrémité supérieure 5B. Comme on le verra plus loin, l'invention ne concerne que les canaux qui débouchent latéralement, c'est-à-dire soit vers le bas sur un bord latéral vertical 6A de la lamelle, soit vers le haut sur un bord latéral vertical 6B de la lamelle. Les sommets d'onde d'une face d'une lamelle touchent ceux de la face en regard de la lamelle adjacente, en formant une multitude de points de croisement ; ces derniers favorisent la distribution et la mise en contact des fluides. De plus, dans le même but, chaque élément 2 est décalé angulairement de 90° par rapport au suivant, comme on le voit sur la figure 1, et chaque lamelle comporte une multitude de perforations, non représentées au dessin.

Sur le figures 1 et 2, on a représenté un garnissage ondulé-croisé classique, dans lequel les lamelles ont des bords verticaux à découpe nette formant, en vue en bout, un zigzag. L'expérience montre qu'avec ces garnissages connus, l'effet de paroi, c'est-à-dire l'accumulation du liquide sur la paroi de la virole ou le long du bord des lamelles, est important, et les figures suivantes, qui représentent des garnissages suivant l'invention, permettent de résoudre efficacement ce problème grâce à la création d'un "effet de miroir", comme il apparaîtra dans la suite.

Sur les figures 3 à 6, on a représenté une lamelle 3 qui, en service, est disposée de la même manière que celles des figures 1 et 2, mais qui présente un bord vertical de configuration modifiée, plus précisément le bord latéral 6A sur lequel débouchent vers le bas des canaux inclinés.

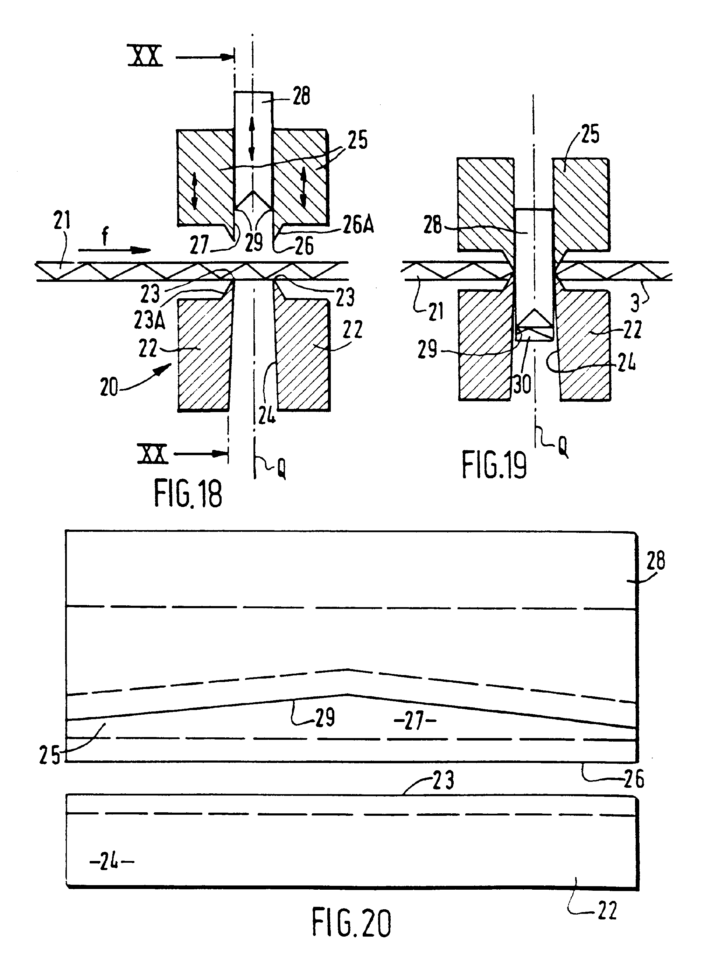

En effet, pour fabriquer les lamelles 3, on part d'un feuillard métallique de grande longueur, que l'on ondule en oblique, puis on découpe à la longueur désirée chaque lamelle au moyen d'une cisaille perpendiculaire aux bords longitudinaux du feuillard, comme on le décrira plus en détail dans la suite, en regard des figures 18 à 20.

Ceci a pour résultat un écrasement du bord avant de chaque lamelle (en considérant le sens de défilement du feuillard) : les sommets d'onde 4 et des creux d'ondes 5 sont ramenés dans le plan médian P de la lamelle en formant alternativement de chaque côté de ce plan des zones 7 en forme de triangles isocèles indiquées par des hachures fines pour les sommets d'ondes et par des pointillés pour les creux d'ondes sur les figures 3, 5 et 6.

En vue en bout (figure 3), les bases des triangles isocèles se trouvent dans le prolongement les unes des autres, dans le plan P.

En pratique, du fait de la rigidité du métal ondulé et de la présence des trous dont sont pourvues les lamelles, l'étirage de la matière n'est pas parfaitement régulier, et les zones 7 ne sont pas parfaitement triangulaires mais peuvent présenter des écarts plus ou moins importants par rapport à cette forme ainsi que des déchirures localisées. Il faut donc considérer les figures 3 à 6 comme des schémas théoriques. De plus, l'écrasement provoqué par la cisaille donne naissance à une petite bande aplatie 8 (figures 4 à 6) le long du bord 6A de la lamelle.

En fonctionnement, on constate que la présence des zones 7 crée dans chaque canal, près du bord 6A, un obstacle à l'écoulement jusqu'à ce bord du liquide et, en combinaison avec la présence des points de croisement des sommets d'ondes des différentes lamelles, assure un renvoi efficace du liquide vers l'intérieur du garnissage. Ainsi, l'effet de paroi est presque totalement supprimé et remplacé par un "effet de miroir", et l'efficacité de la colonne est considérablement augmentée.

La figure 7 montre un autre type d'obstacle que l'on peut créer près du bord 6A : en rapprochant l'une de l'autre deux tiges (non représentées) parallèles aux bords 6A, on forme simultanément des évidements 9 dans les sommets et dans les creux d'ondes, à une petite distance de ce bord. De préférence, on assure la présence d'au moins un point de croisement 9a entre l'évidement 9 et l'extrémité inférieure du sommet d'onde 5 correspondant.

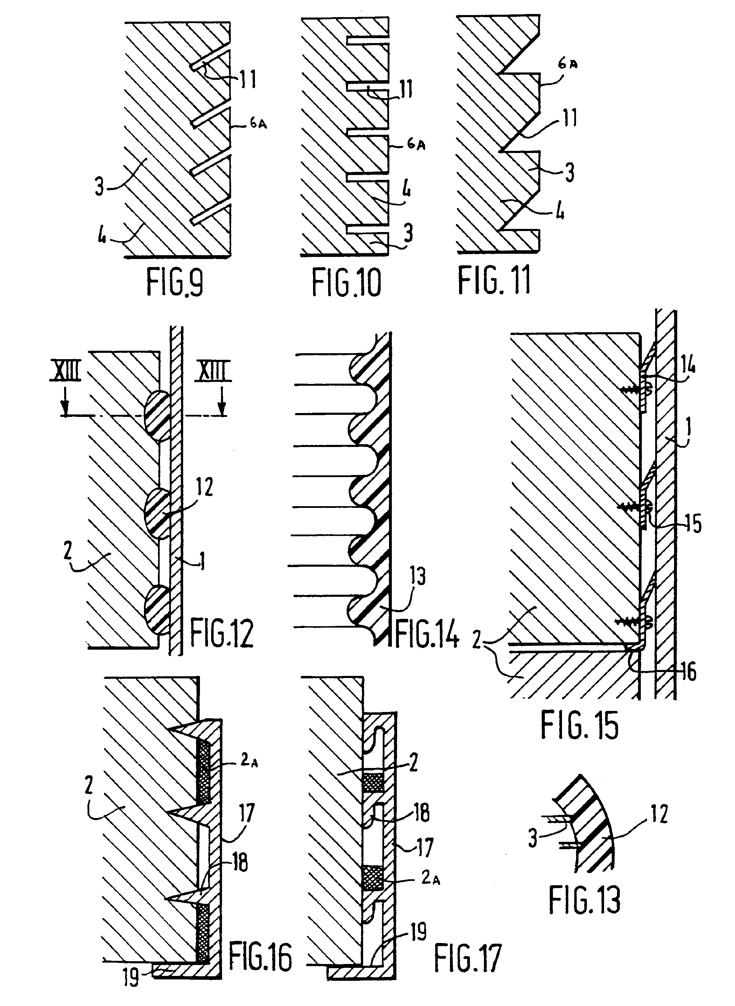

Dans la variante de la figure 8, les creux d'ondes sont complètement bouchés sur les deux faces de la lamelle, sur une petite distance, par une matière de remplissage appropriée 10 qui peut être injectée, pressée, encastrée, soudée, etc... La profondeur du remplissage est choisie suffisante pour que, dans chaque onde, le liquide soit renvoyé de façon sûre vers l'intérieur du garnissage. Une manière commode de réaliser ce bouchage consiste à boucher globalement, sur le paquet terminé, toutes les ondes débouchant sur la périphérie de ce paquet, auquel cas on bouche également les extrémités supérieures des ondes sur les bords 6B, ce qui ne présente pas d'inconvénient notable.

Les figures 9 à 11 illustrent une autre manière d'empêcher le liquide d'atteindre le bord 6A des lamelles, consistant à réaliser à partir de ce bord des encoches 11 qui coupent les ondes. Ces encoches peuvent par exemple être linéaires et inclinées vers le bas dans le sens opposé aux ondes descendantes (figure 9), linéaires et horizontales (figure 10) ou triangulaires avec un bord inférieur horizontal et un bord supérieur oblique descendant dans le sens opposé aux ondes descendantes (figure 11). Comme précédemment, ces encoches peuvent être réalisées à la scie sur l'empilage de lamelles.

Les figures 12 à 17 représentent des manières avantageuses de monter les garnissages suivant l'invention, qui interdisent au liquide ayant néanmoins atteint le bord 6A des lamelles de ruisseler sur la paroi de la virole.

Les figures 12 à 15 correspondent notamment à des colonnes de diamètre relativement petit, jusqu'à 1 et 2 m environ, et les figures 16 et 17, en particulier, aux diamètres supérieurs.

Sur les figures 12 et 13, l'élément de garnissage 2 est monté directement dans la virole 1 avec interposition de plusieurs joints d'étanchéité circulaires 12 de faible hauteur espacés les uns des autres. Ces joints sont souples, de sorte que le bord des lamelles pénètre légèrement dedans, comme on le voit à la figure 13, et se trouve maintenu à une distance déterminée de la virole.

Les joints 12 peuvent être remplacés par un joint unique 13 présentant sur sa face intérieure des ondulations, comme représenté à la figure 14.

Dans la variante de la figure 15, l'élément 2 est monté dans la virole avec interposition d'une série d'organes séparés 14 constitués par plusieurs cerceaux, fixés côté intérieur au garnissage par des vis 15 et appuyés côté extérieur à la virole en assurant une relative étanchéïté. La partie des cerceaux au contact du garnissage à une faible hauteur et est espacée de la virole. Comme représenté, le cerceau inférieur peut présenter un talon 16 servant à la fois de support de l'élément 2 et d'organe de renvoi du liquide vers l'axe de la colonne. Les têtes des vis 15, ou d'autres organes de positionnement, peuvent être utilisés pour garantir un espace libre minimal entre l'élément 2 et la virole 1.

Pour les grands diamètres (figures 16 et 17), il peut être préférable de prévoir un dispositif intermédiaire de maintien des paquets de lamelles pour faciliter la manutention de ces derniers, ce dispositif étant à son tour monté dans la virole de la colonne par des moyens appropriés (non représentés). On utilise une ceinture périphérique 17 munie de plusieurs nervures circulaires 18 et éventuellement d'un talon inférieur 19. Les nervures 18 peuvent pénétrer dans l'empilage de lamelles (figure 16) ou simplement s'appliquer sur les bords des lamelles (figure 17). Dans ce cas également, bien entendu, on assure une relative étanchéïté entre la virole et les lamelles pour éviter que le gaz montant ne by-passe le garnissage ; par exemple, la ceinture 17 peut porter extérieurement un organe d'étanchéïté circulaire tel que le joint 12 de la figure 12 ou le cerceau 14 de la figure 15, cet organe s'appliquant de façon étanche contre la virole de la colonne, tandis que l'étanchéïté entre la ceinture 17 et les lamelles est obtenue grâce aux nervures 18.

Dans chacun des agencements des figures 12 à 17, l'espace annulaire créé entre l'élément de garnissage 2 et la paroi cylindrique (virole 1 ou ceinture 17) qui l'entoure donne au gaz montant la possibilité de by-passer le liquide sur une certaine hauteur, ce qui peut être gênant dans certains cas, notamment au sommet des colonnes lorsqu'une production à haute pureté est désirée. Pour éviter ceci, on peut emplir une partie de ces espaces annulaires d'un garnissage 2A ayant de préférence une structure plus fine que celle de l'élément 2, par exemple d'un feutre ou d'un tissu métallique. Le garnissage 2A peut occuper la totalité d'un espace annulaire sur deux ou trois (figure 16), ou une partie, de préférence la partie inférieure où peut se rassembler le liquide, de tous ces espaces (figure 17) ou de seulement certains d'entre eux.

Les figures 18 à 20 illustrent la manière dont est effectué le cisaillage dont il a été question plus haut.

L'outillage, ou cisaille, 20 est symétrique par rapport à un plan vertical Q perpendiculaire à la direction horizontale f de défilement du feuillard ondulé 21 de départ. Il comprend :

- deux couteaux inférieurs fixes 22 dont l'arête supérieure 23 est rectiligne, horizontale et parallèle au plan Q. Les faces 24 en regard des deux couteaux 22 s'écartent légèrement l'une de l'autre vers le bas, et les arêtes 23 sont bordées extérieurement par des faces externes 23A inclinées à 30° environ sur la verticale ;

- deux presse-bande supérieurs 25, mobiles verticalement, qui présentent une arête inférieure 26 également rectiligne, horizontale et parallèle au plan Q. Chaque arête 26 est située juste au-dessus de l'arête 23 correspondante et est également bordée extérieurement par une face 26A inclinée à 30° environ sur la verticale. Chaque presse-bande présente en regard de l'autre une face 27 parallèle au plan Q ;

- un double couteau supérieur 28 guidé à coulissement vertical entre les faces 27. Son extrémité inférieure a, vue perpendiculairement à la direction f (figures 18 et 19), un profil en V inversé, ce qui définit deux arêtes de coupe 29 adjacentes aux faces 27. Comme on le voit à la figure 20, chaque arête a, vue suivant la direction f, un profil en V inversé très évasé.

En fonctionnement, les presse-bande 25 et le couteau 28 étant relevés (figure 18), on fait avancer la bande 21, en appui sur les deux arêtes 23, jusqu'à ce qu'une longueur prédéterminée de bande dépasse vers l'aval (en considérant la flèche f) de l'arête 23 aval.

On fait alors descendre les presse-bande 25, ce qui produit un double pincement de la bande 21, entre chaque arête 26 et l'arête 23 en regard, et réalise l'étirement du métal formant les zones 7 décrites plus haut, ainsi que l'étroite bande 8, dont la largeur correspond à celle des arêtes 23 et 26. Pendant cette opération, les zones 7 épousent les faces inclinées 23A et 26A.

Puis on fait descendre le couteau 28, ce qui découpe une chute 30 (figure 19) entre les deux couteaux inférieurs et détache une lamelle 3 de longueur prédéterminée.

Grâce à la symétrie de la cisaille, le bord avant de la bande 21 non encore coupée à longueur a une configuration analogue, voire identique, au bord arrière de la lamelle 3 qui vient d'être détachée. Par suite, chaque lamelle à des bords avant et arrière similaires, ce qui, en service, ne joue par un rôle essentiel vis-à-vis de la distribution du liquide, mais facilite la mise en place des lamelles, par un glissement plus aisé des lamelles les unes contre les autres, pour constituer l'élément 2. A ceci s'ajoute une sécurité accrue du personnel manipulant les lamelles et/ou les empilages, car les bords ainsi cisaillés sont moins coupants.

**Revendications**

1. Dispositif d'échange de chaleur et de matière à contre-courant entre un liquide descendant et un gaz montant, du type comprenant un paquet de lamelles ondulées (3) comportant des ondulations alternées parallèles (4, 5), disposées chacune dans un plan général vertical et les unes contre les autres, les ondulations étant obliques et descendant dans des sens opposés d'une lamelle à la suivante, les ondulations de chaque lamelle définissant des premiers et des seconds canaux inclinés qui débouchent respectivement vers le bas et vers le haut sur un bord latéral (6A, 6B) de la lamelle, caractérisé en ce qu'il comporte, le long du bord latéral (6A, 6B) des lamelles (3), des moyens formant obstacle à l'écoulement du liquide (7 ; 9 ; 10 ; 11 ; 12 ; 13 ; 14) à l'extrémité inférieure (4A, 5A) des premiers canaux et assurant un renvoi du liquide vers l'intérieur du paquet de lamelles.

2. Dispositif selon la revendication 1, caractérisé en ce que la ligne de plus grande pente de chaque premier canal est nettement modifiée à son extrémité inférieure (4A, 5A) par déformation de la lamelle (3).

3. Dispositif selon la revendication 2, caractérisé en ce que les parties d'extrémité inférieure des ondulations formant les premiers canaux sont écrasées jusque dans le plan médian (P) de la lamelle (3), de façon à constituer des zones étirées (7) ayant sensiblement la forme de triangles isocèles situés alternativement des deux côtés de ce plan et dont les bases se trouvent, en vue en bout, dans le prolongement les unes des autres.

4. Dispositif selon la revendication 2, caractérisé en ce que le moyen formant obstacle est constitué par un écrasement partiel (19) des ondulations formant les premiers canaux à leurs extrémités inférieures (4A, 5A).

5. Dispositif selon la revendication 1, caractérisé en ce que le moyen formant obstacle est constitué par des encoches (11) s'étendant vers l'intérieur à partir du bord latéral (6A) des lamelles (3).

6. Dispositif selon l'une des revendications 1 à 5, caractérisé en ce que le moyen formant obstacle comprend un matériau rapporté (10, 12, 13, 14, 18) obstruant ladite extrémité inférieure (4A, 5A).

7. Dispositif selon l'une des revendications 1 à 6, caractérisé en ce que chaque lamelle (3) a une configuration rectangulaire, le paquet de lamelles ayant une configuration générale cylindrique et en ce qu'il comporte une paroi (1) entourant le paquet de lamelles.

8. Utilisation du dispositif selon l'une des revendications 1 à 7, dans une colonne de distillation.

9. Utilisation selon la revendication 8, caractérisée en ce que le dispositif est disposé dans une virole (1) de la colonne, avec interposition d'éléments de montage circulaires (12, 13, 14).

10. Utilisation selon la revendication 8, caractérisée en ce que le dispositif est maintenu dans une ceinture périphérique (17) comportant des éléments de montage circulaires (18) coopérant avec la périphérie du paquet de lamelles.

11. Utilisation selon la revendication 9 ou la revendication 10, caractérisée en ce qu'au moins une partie des espaces annulaires existant entre les éléments de montage (12, 13, 18) est remplie d'un garnissage poreux (2A), notamment à structure plus fine que le paquet de lamelles.

12. Utilisation selon l'une des revendications 8 à 11, caractérisée en ce qu'il est prévu à la base du paquet (2) un talon (16 ; 19) faisant saillie radialement sous ce paquet.

13. Utilisation selon l'une des revendications 8 à 12 dans une colonne de distillation d'air, caractérisée en ce que les lamelles (3) sont formées à partir d'un feuillard métallique.

## Claims

1. Heat and material exchanger device with counterflow between a descending liquid and a rising gas, of the type comprising a package of undulated lamellae (3) comprising alternate parallel undulations (4, 5) each arranged in a general vertical plane and one against another, the undulations being oblique and descending in opposite directions from one lamella to the next, the undulations in each lamella defining first and second sloping channels which open respectively downwards anon upwards at a side edge (6A, 6B) of the lamella, characterised in that it comprises, along the side edge (6A, 6B) of the lamellae (3), means (7; 9; 10; 11; 12; 13; 14) forming an obstacle to the flow of the liquid at the lower end (4A, 5A) of the first channels and ensuring the return of the liquid to the inside of the package of lamellae.

2. Device according to claim 1, characterised in that the line of greatest slope of each first channel is altered distinctly at its lower end (4A, 5A) by deformation of the lamella (3).

3. Device according to claim 2, characterised in that the lower end parts of the undulations forming the first channels are flattened as far as the median plane (P) of the lamella (3) so as to form drawn-out regions (7) having substantially the shape of isosceles triangles located alternately on either side of this plane, with the bases of these triangles being situated, when seen from an end view, so that they extend into each other.

4. Device according to claim 2, characterised in that the means forming an obstacle is constituted by a partial flattening (19) of the undulations forming the first channels at their lower ends (4A, 5A).

5. Device according to claim 1, characterised in that the means forming an obstacle is constituted by notches (11) extending inwards from the side edge (6A) of the lamellae (3).

6. Device according to one of claims 1 to 5, characterised in that the means forming an obstacle comprises added material (10, 12, 13, 14, 18) obstructing the said lower end (4A, 5A).

7. Device according to one of claims 1 to 6, characterised in that each lamella (3) has a rectangular configuration, the package of lamellae having a general cylindrical configuration, and in that the said device comprises a wall (1) surrounding the package of lamellae.

8. Use of the device according to one of claims 1 to 7, in a distillation column.

9. Use according to claim 8, characterised in that the device is arranged in a tube (1) of the column, with the interposition of circular mounting elements (12, 13, 14).

10. Use according to claim 8, characterised in that the device is retained in a peripheral belt (17) comprising circular mounting elements (18) cooperating with the periphery of the package of lamellae.

11. Use according to claim 9 or claim 10, characterised in that at least some of the annular spaces between the mounting elements (12, 13, 18) are filled with porous packing (2A) having in particular a finer structure than the package of lamellae.

12. Use according to one of claims 8 to 11, characterised in that there is provided at the base of the package (2) a flange (16; 19) projecting radially under this package.

13. Use according to one of claims 8 to 12 in an air distillation column, characterised in that the lamellae (3) are formed from a metal strip.

## Patentansprüche

1. Vorrichtung zum Austausch von Wärme und Stoff im Gegenstrom zwischen einer sinkenden Flüssigkeit und einem steigenden Gas, mit einem Paket von welligen Lamellen (3) mit abwechselnden, parallelen Wellen (4, 5), die jeweils in einer im allgemeinen vertikalen Ebene und gegeneinander angeordnet sind, wobei die Wellen schräg verlaufen und in entgegengesetzten Richtungen von einer Lamelle zur nächsten sinken, wobei die Wellen jeder Lamelle erste und zweite geneigte Kanäle begrenzen, die nach unten bzw. nach oben an einem seitlichen Rand (6A, 6B) des Lamelle münden, dadurch gekennzeichnet, daß sie längs des seitlichen Randes (6A, 6B) der Lamellen (3) Mittel aufweist, die für die Flüssigkeit ein Fließhindernis (7; 9; 10; 11; 12; 13; 14) am unteren Ende (4A, 5A) der ersten Kanäle bilden und ein Rückführen der Flüssigkeit zum Inneren des Lamellenpaketes sicherstellen.

2. Vorrichtung nach Anspruch 1, dadurch gekennzeichnet, daß die Linie mit der größten Neigung jedes ersten Kanals an ihrem unteren Ende (4A, 5A) durch Deformation der Lamelle (3) deutlich abgewandelt ist.

3. Vorrichtung nach Anspruch 2, dadurch gekenn-

**zeichnet,** daß die Teile des unteren Endes der Wellen, welche die ersten Kanäle bilden, bis in die mittlere Ebene (P) der Lamelle (3) flachgedrückt sind, um gezogene Zonen (7) zu bilden, welche im wesentlichen gleichschenklige Dreiecke haben, die abwechselnd auf beiden Seiten der Ebene angeordnet sind und deren Basen sich bezüglich des Endes in der Verlängerung voneinander befinden.

4. Vorrichtung nach Anspruch 2, **dadurch gekennzeichnet,** daß das das Hinternis bildende Mittel durch eine teilweise Verformung (19) der Wellen gebildet ist, welche die ersten Kanäle an ihren unteren Enden (4A, 5A) bilden.

5. Vorrichtung nach Anspruch 1, **dadurch gekennzeichnet,** daß das das Hindernis bildende Mittel aus Kerben (11) besteht, die sich vom seitlichen Rand (6A) der Lamellen (3) nach Innen hin erstrecken.

6. Vorrichtung nach einem der Ansprüche 1 bis 5, **dadurch gekennzeichnet,** daß das das Hinternis bildende Mittel ein eingesetztes Material (10, 12, 13, 14, 18) aufweist, welches das untere Ende (4A, 5A) verstopft.

7. Vorrichtung nach einem der Ansprüche 1 bis 6, **dadurch gekennzeichnet,** daß jede Lamelle (3) eine rechteckige Form hat, wobei das Paket der Lamellen eine im allgemeinen zylindrische Gestalt hat und daß sie eine Wand (1) aufweist, welche das Lamellenpaket umgibt.

8. Verwendung der Vorrichtung nach einem der Ansprüche 1 bis 7 in einer Destillationskolonne.

9. Verwendung nach Anspruch 8, **dadurch gekennzeichnet,** daß die Vorrichtung in einem Mantel (1) der Kolonne mit dazwischen angeordneten, kreisförmigen Montageelementen (12, 13, 14) angeordnet ist.

10. Verwendung nach Anspruch 8, **dadurch gekennzeichnet,** daß die Vorrichtung in einem Umfangsring (17) gehalten ist, welcher kreisförmige Montageelemente (18) aufweist, welche mit dem Umfang des Lamellenpaketes zusammenwirken.

11. Verwendung nach Anspruch 9 oder Anspruch 10, **dadurch gekennzeichnet,** daß mindestens ein Teil der ringförmigen Räume, die zwischen den Montageelementen (12, 13, 18) bestehen, mit einer porösen Auskleidung (2A) gefüllt ist, insbesondere mit feinerer Struktur als das Lamellenpaket.

12. Verwendung nach einem der Ansprüche 8 bis 11, **dadurch gekennzeichnet,** daß am Boden des Pakets (2) eine Nase (16; 19) vorgesehen ist, die unter diesem Paket radial vorspringt.

13. Verwendung nach einem der Ansprüche 8 bis 12 in einer Luftdestillationskolonne, **dadurch gekennzeichnet,** daß die Lamellen (3) aus einem metallischen Bandmaterial gebildet sind.

FIG.1

FIG.2

FIG.3

FIG.4

FIG.5

FIG.6

FIG.7

FIG.8

EP 0 367 817 B1

FIG.9

FIG.10

FIG. 11

FIG.12

FIG.14

FIG. 15

FIG.13

FIG.16

FIG.17

9

FIG.18

FIG.19

FIG.20